(19)

Europäisches
Patentamt
European
Patent Office
Office européen
des brevets

(11)  **EP 3 156 818 B1**

(12)  **EUROPEAN PATENT SPECIFICATION**

(45) Date of publication and mention
of the grant of the patent:
**20.11.2019  Bulletin 2019/47**

(51) Int Cl.:
***G01S 13/90*** *(2006.01)*   ***G01S 7/40*** *(2006.01)*

(21) Application number: **16193951.7**

(22) Date of filing: **14.10.2016**

(54) **AUTOMATIC THREE-DIMENSIONAL GEOLOCATION OF SAR TARGETS AND SIMULTANEOUS ESTIMATION OF TROPOSPHERIC PROPAGATION DELAYS USING TWO LONG-APERTURE SAR IMAGES**

AUTOMATISCHE DREIDIMENSIONALE GEOLOKALISIERUNG VON SAR-ZIELEN UND SIMULTANER SCHÄTZUNG VON TROPOSPHÄRISCHEN AUSBREITUNGSVERZÖGERUNGEN MIT ZWEI SAR-BILDERN MIT LANGEN BLENDENÖFFNUNGEN

GÉOLOCALISATION AUTOMATIQUE EN TROIS DIMENSIONS DE CIBLES SAR ET ESTIMATION SIMULTANÉE DES DÉLAIS DE PROPAGATION STRATOSPHÉRIQUE À L'AIDE DE DEUX IMAGES SAR À LONGUE OUVERTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2015  DE 102015220218**
**18.12.2015  DE 102015226042**

(43) Date of publication of application:
**19.04.2017  Bulletin 2017/16**

(73) Proprietor: **Deutsches Zentrum für Luft- und Raumfahrt e.V.**
**51147 Köln (DE)**

(72) Inventors:
- **Duque, Sergio**
  **80538 München (DE)**
- **Parizzi, Alessandro**
  **80809 München (DE)**
- **Dr. De Zan, Francesco**
  **80687 München (DE)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-B1- 1 183 551    CN-A- 104 007 439**

- **DUQUE SERGI ET AL: "Absolute Height Estimation Using a Single TerraSAR-X Staring Spotlight Acquisition", IEEE GEOSCIENCE AND REMOTE SENSING LETTERS, IEEE SERVICE CENTER, NEW YORK, NY, US, vol. 12, no. 8, 1 August 2015 (2015-08-01) , pages 1735-1739, XP011585097, ISSN: 1545-598X, DOI: 10.1109/LGRS.2015.2422893 [retrieved on 2015-06-15]**
- **DUQUE SERGI ET AL: "TerraSAR-X staring spotlight imaging: A chance to estimate absolute heights", 2015 IEEE INTERNATIONAL GEOSCIENCE AND REMOTE SENSING SYMPOSIUM (IGARSS), IEEE, 26 July 2015 (2015-07-26), pages 2437-2440, XP032806522, DOI: 10.1109/IGARSS.2015.7326302 [retrieved on 2015-11-10]**

**Description**

Field of the Invention

The main purpose of the invention is to obtain an absolute 3D urban reconstruction using just two spaceborne Synthetic Aperture Radar (SAR) acquisitions. Moreover, the invention method is able to derive absolute estimations of the tropospheric delay for both acquisitions.

State of the Art

Up to now, obtaining an absolute 3D urban reconstruction using spaceborne SAR imagery presents the following problems:

1) Need of a large set of images. This implies huge economical costs for getting a 3D model of an urban scene. In addition, to obtain a large set of images requires also time. The necessary time span is typically around a year.
2) Techniques based on SAR interferometry and tomography may need of ground control points. Reliable ground control points are not always available everywhere. Sometimes dedicated ground surveys need to be carried out to obtain reliable ground control points which implies also an economical cost.
3) For an accurate 3D geolocation using radar signals, the extra signal path delay due to travelling through mediums different than vacuum (i.e. the atmosphere) needs to be taken into account. This implies the necessity of external data to estimate the ionospheric and tropospheric delays seen by the sensor geometry. This estimation depends on several different models and it needs to be projected to the radar line of sight (LOS).
Consequently, it may be not accurate and influence the accuracy of the 3D positioning.
4) Techniques based on SAR radargrammetry present problems to automatically identify the point targets within the different employed geometries.

The State of the Art for absolute 3D geolocation in urban scenarios using SAR comprises radargrammetry and interferometric techniques such as Permanent Scatter Interferometry (PSI) and SAR Tomography.
The first Urban accurate DEM using Permanent Scatter Interferometry is explained in Perissin, D.; Rocca, F., "High-Accuracy Urban DEM Using Permanent Scatterers," Geoscience and Remote Sensing, IEEE Transactions on, vol.44, no.11, pp.3338,3347, Nov. 2006 (doi: 10.1109/TGRS.2006.877754). This known method requires a large number of images to abate tropospheric disturbances, the work described in the given reference employs 100 images. In addition, ground control points are needed. (Points 1 and 2 as above).
A more advanced PSI processing using different acquisitions geometries is done in Gernhardt, Stefan, and Bamler, Richard. "Deformation monitoring of single buildings using meter-resolution SAR data in PSI." ISPRS Journal of Photogrammetry and Remote Sensing 73 (2012): 68-79. Here, two different point clouds are generated and they are merged in a post-processing step. The cited paper provides an accurate absolute 3D geolocation as well as movement of the selected point targets. Again, a large number of images are needed from both geometries and ground control points are needed (Points 1 and 2 as above).
SAR radargrammetry is applied to urban scenarios in Goel, K.; Adam, N., "Three-Dimensional Positioning of Point Scatterers Based on Radargrammetry," Geoscience and Remote Sensing, IEEE Transactions on, vol.50, no.6, pp.2355,2363, June 2012 (doi: 10.1109/TGRS.2011.2171975). The method proposed in this paper requires three stacks of images from different geometries. However, this method does not require any ground control point. In this paper, signal path delays are not taken into account. This means that it is possible to have a significant height bias of few meters when applying this method (Points 1 and 3 as above).
The following reference Xiao Xiang Zhu; Bamler, R., "Superresolving SAR Tomography for Multidimensional Imaging of Urban Areas: Compressive sensing-based TomoSAR inversion," Signal Processing Magazine, IEEE, vol.31, no.4, pp.51,58, July 2014 (doi: 10.1109/MSP.2014.2312098) refers to SAR tomography on urban scenarios.
SAR tomography is an evolution of the SAR interferometry. Its particularity is that it is capable of distinguishing between different scatters within the same resolution cell. Hence, SAR tomography output is more dense point cloud than a PSI point cloud under similar conditions. SAR tomography applied to urban scenarios achieves a better accuracy in 3D target geolocation and monitoring than PSI. It presents typical positioning accuracies in the order of few centimeters. However, again, it usually needs a large number of images to achieve this accuracy. In addition, it also employs control points and a priori estimation of the signal path delays (Points 1, 2 and 3 as above).
There are a few recent works related to obtaining the absolute pixel localization of a SAR image. This means, to find where a point target should appear in the SAR image given its ground 3D position and applying a set of geodynamic and path delay corrections. The following works carried out using TerraSAR-X data show that it is possible to achieve an agreement around the centimeter level between where the point target appears and where it should appear according to its ground 3D position and all the applied corrections.

The following two papers, namely Eineder, M.; Minet, C.; Steigenberger, P.; Xiaoying Cong; Fritz, T., "Imaging Geodesy-Toward Centimeter-Level Ranging Accuracy With TerraSAR-X," Geoscience and Remote Sensing, IEEE Transactions on, vol.49, no.2, pp.661,671, Feb. 2011 (doi: 10.1109/TGRS.2010.2060264), and Balss, Ulrich; Gisinger, Christoph; Cong, Xiao Ying; Brcic, Ramon; Hackel, Stefan; Eineder, Michael, "Precise Measurements on the Absolute Localization Accuracy of TerraSAR-X on the Base of Far-Distributed Test Sites," EUSAR 2014; 10th European Conference on Synthetic Aperture Radar; Proceedings of, vol., no., pp.1,4, 3-5 June 2014 show the potentiality of using TerraSAR-X acquisitions for precise geolocation. The works are limited to the 2-D radar geometry, range (i.e. distance) and azimuth dimensions. The good agreement between several measurement is due to taken into account all the possible corrections and also to the good orbit accuracy provided with TerraSAR-X products. The second work shows the repeatability of the good results in different test sites.

The following reference refers to a very recent paper, namely Duque, S.; Breit, H.; Balss, U.; Parizzi, A., "Absolute Height Estimation Using a Single TerraSAR-X Staring Spotlight Acquisition," Geoscience and Remote Sensing Letters, IEEE, vol.PP, no.99, pp.1,5(doi: 10.1109/LGRS.2015.2422893). This work shows that is possible to obtain the 3D coordinates of point targets using a single TerraSAR-X Staring Spotlight (ST) acquisition, i.e. just one image. It is based on the focusing sensibility of spaceborne long apertures to height. This work associates defocusing effect to an absolute height. The obtained accuracies are in the order of 10 meters for bright targets on urban scenarios. In that study it is also shown that there is a coupling effect of height and signal path delay. Thus, in order to obtain absolute heights, the tropospheric signal path delay needs to be provided.

Summary of the Invention

It is an object of the present invention to improve the prior art methods for obtaining 3D geolocation through SAR images.

This object is solved according to the invention by means of a method for the automatic three-dimensional geolocation of SAR targets and simultaneous estimation of tropospheric propagation delays using two long-aperture SAR images, comprising

a) as input to the method: two SAR acquisitions with long aperture acquired with different geometry.

b) point target detection in both images, and

c) providing a defocus analysis for all point targets in both images, which for each point target has as an output a relationship between estimated height and the tropospheric delay.

d) one of two images is selected as master image and the other as slave.

e) then, for every point target of the master image the following sub-steps are performed:

e1) the point target is mapped onto the slave image taking into account its height estimation from step c) at a reference zenith path delay and its range and azimuth position,

e2) a search looking for candidates in the slave image which may refer to the mapped point target from the master image and identifying the position of a candidate in the slave image, wherein more than one candidate may be found, and

e3) thereafter, for each candidate an equation system composed of four equations is solved, wherein two equations are related to the range and azimuth displacement between the mapped point target of the master image and the position of a found candidate in the slave image and wherein the other two equations refer to the relation established in step c) between height and tropospheric delay for the mapped point targets of the master image and a found candidate of slave image.

f) statistical estimations of the tropospheric delay are performed to identify for all point targets the most likely candidates to be associated to the respective mapped point targets of master image.

Individual embodiments of the invention are the subject matter of the dependent claims.

According to a preferred embodiment, for every point target of one image or of an image the following sub-steps are performed:

- the point target is mapped in the other image taking into account its height estimation on the prior step and its range and azimuth position,

- a search looking for candidates which may refer to the same physical point target, wherein more than one candidate may appear for the mapped point target, and

- thereafter, for each candidate the following equation system is solved, wherein the outputs are the estimated precise absolute height and the target's tropospheric delay for both images

$$\begin{cases} \Delta Rg = K_{Rg} \cdot \left( h - h_{ref}^M \right) + \beta_{Rg}^M \cdot \left( ZPD_M - ZPD_{ref} \right) + \beta_{Rg}^S \cdot \left( ZPD_S - ZPD_{ref} \right) \\ \Delta Az = K_{Az} \cdot \left( h - h_{ref}^M \right) + \beta_{Az}^M \cdot \left( ZPD_M - ZPD_{ref} \right) \\ h_{ref}^M = h + \alpha^M \cdot \left( ZPD_M - ZPD_{ref} \right) \\ h_{ref}^S = h + \alpha^S \cdot \left( ZPD_S - ZPD_{ref} \right) \end{cases}$$

Furthermore, it is preferred that statistical estimations of the tropospheric delay exploiting its spatial low-pass character and consequent automatic identification of the correct targets among the candidate cloud is performed.

The invention method is based on two SAR acquisitions with long aperture acquired with different geometries, i.e. different flight directions and different incidence angles. These two images are the input to the method. Then, the following steps take place:

- Point target detection independently in both images.
- Point target defocus analysis. Here, the method establishes for every point target a relationship between estimated height and the tropospheric delay.
- Then, for every point target of one image the following sub-steps occur

  ◦ The point target is mapped in the other image taking into account its height estimation on the prior step and its range and azimuth position.
  ◦ A search looking for candidates which may refer to the same physical point target. More than one candidate may appear for the mapped point target.
  ◦ Then, for every candidate an equation system is solved. In case the candidate corresponds to the point target under study from the first image, the equation system outputs are the estimated precise absolute height and the target's tropospheric delay for both images. Otherwise, the outputs will be random and without physical sense.

- Statistical estimation of the tropospheric delay exploiting its spatial low-pass character and consequent automatic identification of the correct targets among the candidate cloud.

The two SAR acquisitions can be obtained by means of one SAR system which images the area twice at two different points in time and with different geometry, or by means of two SAR systems covering with different geometries the area. According to the invention, "long SAR aperture" means those ones providing a resolution below two meters while "with different geometry" refers to different flight directions and different incident angles. Here, the "different flight directions" mean that they differ at least by a tenth of a degree and "different incidence angles" mean that they differ by at least one degree. Both differences are defined for a system in X-band and with azimuth and range resolutions below the meter. For systems with different characteristics, the difference should be scaled accordingly. Such scaling and adaption are simple and typical in the fields of interferometry or radargrammetry. The minimum flight direction difference should be scaled linearly with azimuth resolution while the incidence angle difference should be scaled linearly with range resolution. That is in a SAR-system with 20 cm x 20 cm resolution, only half of the angular differences compared to a SAR-system with 40 cm x 40 cm resolution is needed.

The innovative aspect of the invention is the reduced number or amount of images employed, the absolute height derivation, the automatic radargrammetic matching without using *a priori* information and the derivation of the absolute signal path delays for both acquisitions.

The invention may be characterized by the following combination of features:

- exploiting the geometrical diversity of long SAR apertures
- jointly estimation with only two images of all the involved parameters (point target height and tropospheric delays in both acquisitions)
- no need of any ground control point
- automatic matching of points in two acquisitions without any *a priori* information.

The invention solves the first above-mentioned four raised points as follows:

1) It only needs a minimum number of two images acquired with different geometries. That means reduced costs and an acquisition time span that can be under a week even with current spaceborne SAR systems.

2) There is absolutely no need of ground control points.
3) The proposed invention estimates the path delays with no need of external information.
4) The proposed invention identifies automatically point targets in the two imaging geometries, based solely on radar signal properties. In particular, there is no need for matching algorithms like those used in computer vision.

Brief Description of the Drawing

Herein below, the invention will be described in more detail referring to the drawing in which

Fig. 1            is a diagram flow of the proposed method,

Fig. 2            is an example of height found through point target analysis assuming different tropospheric delays at sea level,

Fig. 3            is a schema of candidate search in the Slave image for a point target in the Master image,

Fig. 4(a) and (b)   is an example of two acquisitions with different incidence angles, (a) 36° and (b) 54°, over the same building facade,

Fig. 5(a) and (b)   show a selected point marked by white circle in Master image (a) and its candidates in (b) also marked by white circles. The candidate search area is marked by white dots. The mapping of the point target given the a priori height from the autofocus analysis assuming the reference ZPD, the range and azimuth Master position is marked by a white diamond.

Fig. 6            is a 2D histogram for all candidates solution of $ZPD_M$ and $ZPD_S$ and

Fig. 7            is a comparison for the given example between the obtained heights using the proposed invention and the expected heights derived from LiDAR measurements.

Description of Preferred Embodiment of the Invention

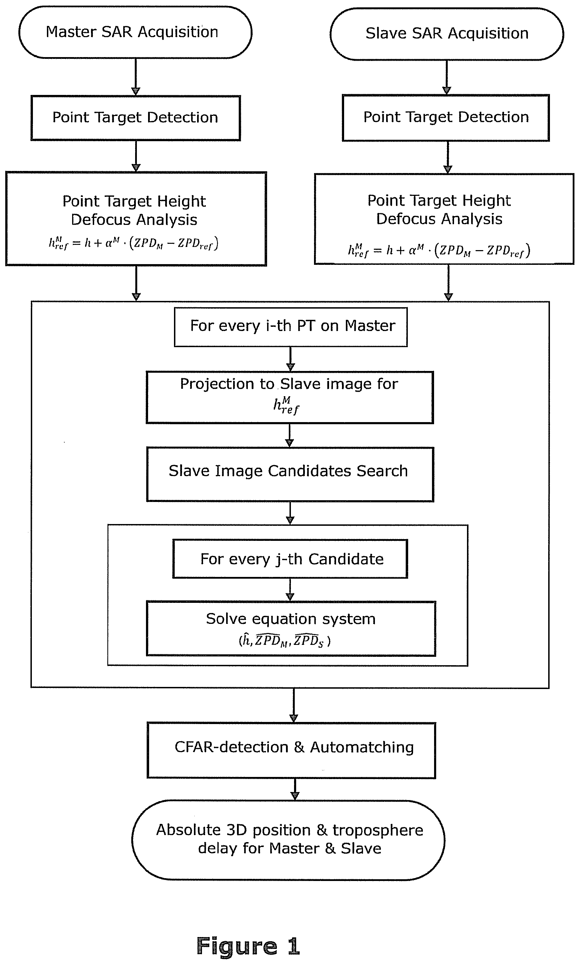

The block diagram of a proposed embodiment of the method according to the invention is illustrated in Fig. 1. The input to this method consists only in two spaceborne SAR acquisitions with long apertures and different geometries. Notice also that due to the different acquisition geometry, the acquisitions should present also a slightly different heading angle. First of all, the possible point targets are identified in both images independently.
From now on, let's set one image as reference and name it Master. The other image will be referred as Slave. Then, every point target from each image is analyzed in terms of azimuth defocusing. This analysis associates the defocussing to point target's height and tropospheric delay.
There is a coupling between height and tropospheric delay as far as focusing parameters are concerned. An unaccounted tropospheric delay during SAR focusing has the same effect as assuming a wrong height. So, from the defocus analysis, it is possible to obtain height estimation for every point target as a function of its tropospheric delay. The linking expression between height and tropospheric delay for a point target in Master image is highly linear. It has the following form

$$h_{ref}^M = h + \alpha^M \cdot (ZPD_M - ZPD_{ref}) \quad (1)$$

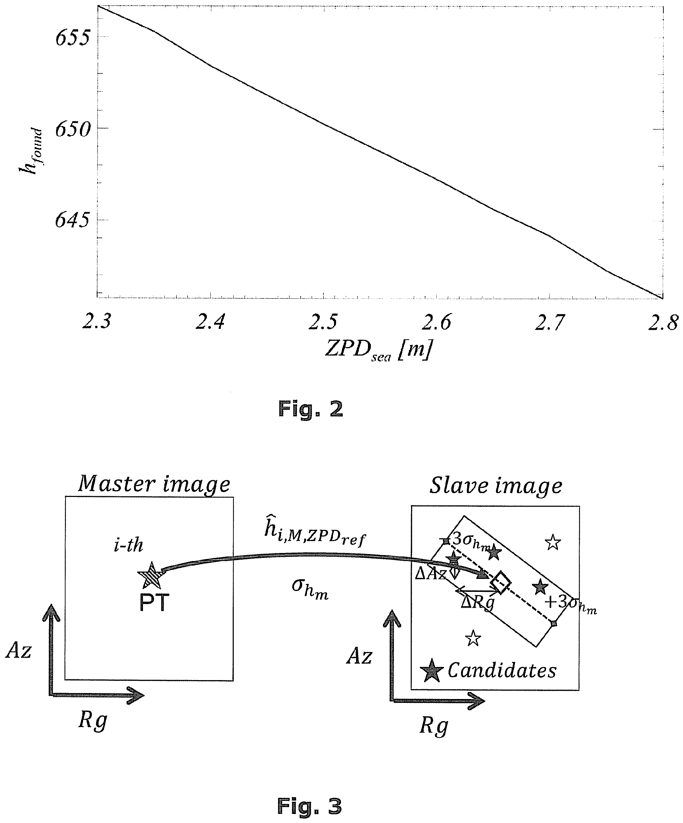

Here, $h$ is the true absolute height of the target, $h_{ref}^M$ is the obtained height from the autofocus of Master image assuming a reference tropospheric Zenith Path Delay (ZPD), $ZPD_M$ is the true ZPD for the target during Master acquisition, $ZPD_{ref}$ is the reference ZPD and $\alpha^M$ is the linear coefficient for Master image. Fig. 2 shows the absolute height derived from autofocus for a certain point target (PT). As it can be seen the obtained height depends linearly with the ZPD at sea level.
From now on, since the tropospheric delay may vary significantly in height, in the order of 2-3 cm in 100 m height, the terms $ZPD_M$, $ZPD_S$ and $ZPD_{ref}$ are referred to a constant reference height. The translation of ZPD from one height to another can be done using some of the available tropospheric delay models. This step can be done optionally. In case it is not performed or it is not properly done, it will worsen the auto-matching step but may not be critical.

The next step is carried out for every PT in the Master image. Every target is mapped in the Slave geometry taking into account its range and azimuth Master position and the derived height for the reference ZPD. Then, the search for point target candidates in the Slave image referring to the same target takes place. Ideally, if there was no influence of the unaccounted tropospheric delay, the corresponding point target should appear on the Slave image along a line. Notice that this line is not parallel to range direction due to the heading angle difference between acquisitions. Its direction is a combination of range and azimuth. The possible values of tropospheric ZPD can be reasonably bounded. For example, a reasonable search range for tropospheric ZPD at sea level can range from 2.3 to 3 meters. Taking into account this possible variation of ZPD and the autofocus height error is possible to determine an area where the point target should appear in the Slave image. The PTs from the Slave image falling into this area are the candidates. Fig. 3 illustrates the process of mapping a PT from the Master image to the Slave image and looking for its matching candidates.

Then, the next step is to solve a linear equation system for each candidate. The equation system is composed by four equations. Two of them are regarding the range and azimuth differences ($\Delta$Rg & $\Delta Az$) between the positions of the mapped point from master and a candidate. The other two refer to the link between point target height and the tropospheric delay in Master and Slave acquisition as it has been described in (1). Thus, the equation system can be expressed by

$$\begin{cases} \Delta Rg = K_{Rg} \cdot \left( h - h_{ref}^M \right) + \beta_{Rg}^M \cdot \left( ZPD_M - ZPD_{ref} \right) + \beta_{Rg}^S \cdot \left( ZPD_S - ZPD_{ref} \right) \\ \Delta Az = K_{Az} \cdot \left( h - h_{ref}^M \right) + \beta_{Az}^M \cdot \left( ZPD_M - ZPD_{ref} \right) \\ h_{ref}^M = h + \alpha^M \cdot \left( ZPD_M - ZPD_{ref} \right) \\ h_{ref}^S = h + \alpha^S \cdot \left( ZPD_S - ZPD_{ref} \right) \end{cases} \qquad (2)$$

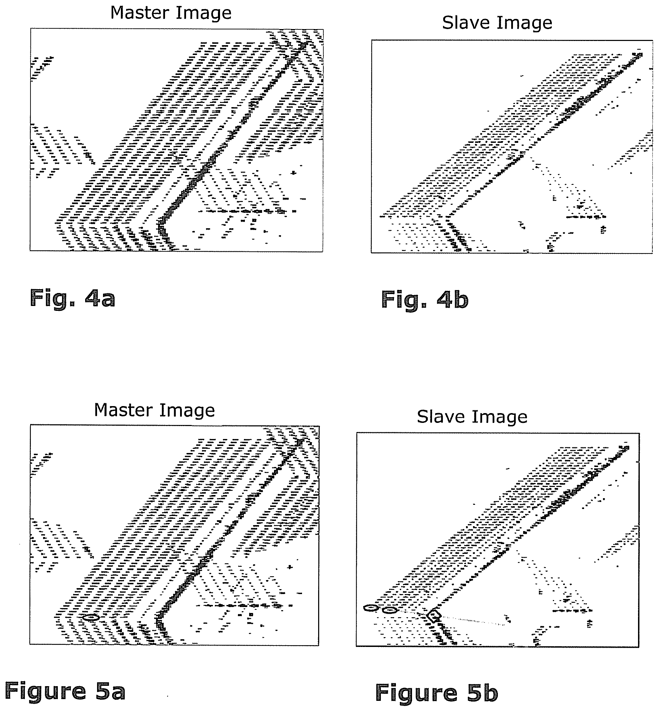

Here, $K_{Rg}$, $K_{Az}$, $\beta_{Rg}^M$, $\beta_{Rg}^S$, $\beta_{Az}^M$, $\alpha^M$ and $\alpha^S$ can be considered constant parameters, they can be numerically calculated or theoretically derived. Moreover, $h_{ref}^M$ and $h_{ref}^S$ refer to the height obtained from the point target defocus analysis for Master and Slave image respectively given the reference ZPD, i.e. $ZPD_{ref}$. The equation system is composed of four equations and has three unknowns, the target's height and its tropospheric delays for Master and Slave acquisitions, i.e. $h$, $ZPD_M$ and $ZPD_S$ repectively. Since the equations are not linearly dependent, it is possible to find a solution and retrieve the unknowns. The problem at this point is that they may be multiple candidates for each i-th Master PT. Fig. 4 shows an example of two SAR acquisitions of TerraSAR-X in Staring Spotlight mode over a building façade with two different incidence angles, (a) refers to the Master image with an incidence angle of 36° while (b) is the Slave image acquired with 54°.

This scenario is shown here in order to help the understanding of the described invention method. Fig. 5 shows an example of looking for candidates of one selected point in the Master image. The selected point is marked by a white circle in the Master image, Fig. 5(a). The mapping of the point target detected in the Master image onto the Slave geometry is plotted (on the Slave) as a white diamond, Fig. 5 (b). Such a mapping, alongside with the Master coordinates (range and azimuth), exploits the height derived in the autofocus analysis (assuming, at this first stage, a reference ZPD). The search area taking into account the derived autofocus height, its accuracy and reasonable possible values of tropospheric delays for Master and Slave is marked by white points in the Slave image, Fig. 5(b). Two candidates appear on the Slave image, Fig. 5(b), marked by white circles.

The proposed invention method consists in solving the equation system for all the possible candidates for each selected PT in the Master image. Afterwards, it is possible to exploit the spatial behavior of tropospheric delay to determine which candidates are the true point targets from the Master image. The tropospheric delay varies slowly (i.e. has a low pass characteristic) in the horizontal plane. This effect is exploited in this method to achieve the auto-matching. The tropospheric delay horizontal variation can be considered negligible for distances of few hundred meters.

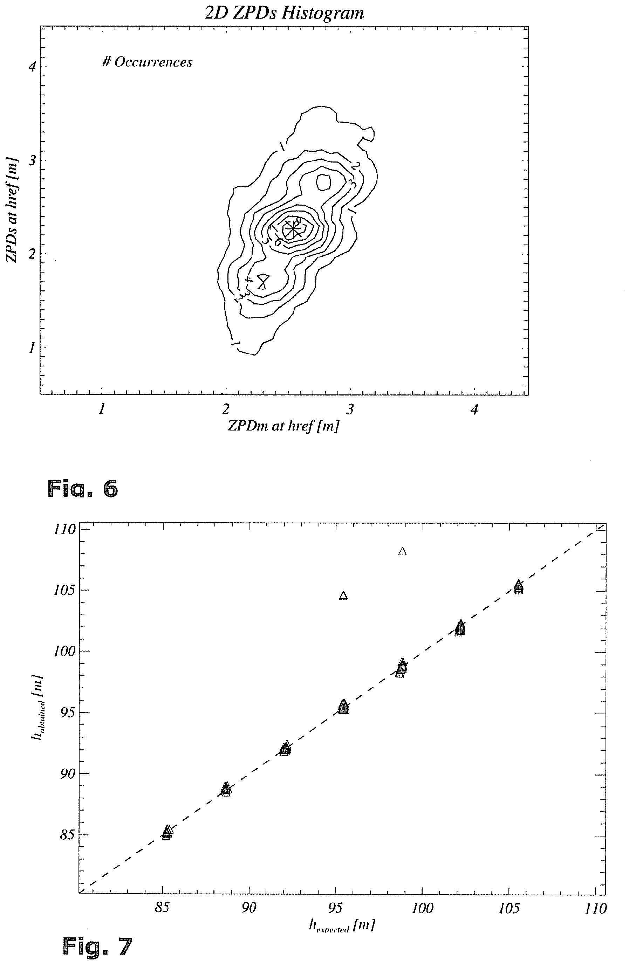

All the found solutions of ZPD for Master and Slave are analyzed together for all candidates within a relatively small spatial window. Fig. 6 shows the 2D histogram of ZPD at the reference height for Master and Slave acquisitions for the façade case showed above. In this case three main Gaussian distributions appear due to the regular pattern of the point targets in the façade. However, there is one distribution with much more energy. Here, we have selected a specific façade which follows some point target pattern distribution. Normally, in a more heterogeneous test, the expected 2D histogram will present a Gaussian distribution surrounded by noise. The noise power will be dependent on the point target density of the scene. Thus, arrived at this point, the problem can be solved as a classic radar problem of Constant False Alarm Ratio (CFAR). The candidates who give a ZPD solution for Master and Slave around the main distribution will be the most likely ones to match the point targets in the Master image.

So, at the end the method is capable of performing an auto-matching of point targets between Master and Slave images and of deriving the point target's height and tropospheric delays for both acquisitions. As a final example, Fig. 7 shows a plot comparison for the given example between the obtained heights using the proposed invention and the expected heights derived from LiDAR measurements. The standard deviation between both is just 15.7 cm.

The invention method described here is able to obtain accurate absolute 3D positioning using just two long-aperture SAR acquisitions.

A direct commercial application for this is the 3D mapping of cities. The data can be acquired just within few days and there is no need of any ground survey, everything can be done remotely and with a low cost. The proposed methodology can be applied also to analyze city characteristics like building density, building height distribution, unbuilt areas, etc. Repeated survey can quickly monitor the evolution of the urban structure.

The derived absolute tropospheric delay can be applied to weather prediction, improvement of weather models and other SAR processing products where the estimation of tropospheric delay plays an important role, e.g. Persistent Scatterer Interferometry (PSI) products.

**Claims**

1. Method for the automatic three-dimensional geolocation of SAR targets and simultaneous estimation of tropospheric propagation delays using two long-aperture SAR images each providing a resolution below two meters, comprising

   a) two SAR acquisitions with long aperture acquired with different geometry providing as input to the method,
   b) point target detection in both images,
   c) providing a defocus analysis for all point targets in both images, wherein for each point target a relationship between an estimated height and a tropospheric delay is established,
   d) one of two images is selected as master image and the other as slave,
   e) then, for every point target of the master image the following sub-steps are performed:

   e1) the point target is mapped onto the slave image taking into account its height estimation from step c) at a reference zenith path delay and its range and azimuth position,
   e2) a search looking for candidates in the slave image which may refer to the mapped point target from the master image and identifying the position of a candidate in the slave image, wherein more than one candidate may be found , and
   e3) thereafter, for each candidate an equation system composed of four equations is solved, wherein two equations are related to the range and azimuth differences $\Delta R_g$ and $\Delta A_z$ between the position of the point target mapped from the master image and the position of a found candidate in the slave image and wherein the other two equations refer to the relation established in step c) between height and tropospheric delay for the mapped point targets of the master image and a found candidate of slave image, and

   f) statistical estimations of the tropospheric delay are performed to identify for all point targets the most likely candidates to be associated to the respective mapped point targets of master image.

2. Method according to claim 1, **characterized in that** the mentioned equation system can be described as follows:

$$\begin{cases} \Delta Rg = K_{Rg} \cdot \left( h - h_{ref}^M \right) + \beta_{Rg}^M \cdot \left( ZPD_M - ZPD_{ref} \right) + \beta_{Rg}^S \cdot \left( ZPD_S - ZPD_{ref} \right) \\ \Delta Az = K_{Az} \cdot \left( h - h_{ref}^M \right) + \beta_{Az}^M \cdot \left( ZPD_M - ZPD_{ref} \right) \\ h_{ref}^M = h + \alpha^M \cdot \left( ZPD_M - ZPD_{ref} \right) \\ h_{ref}^S = h + \alpha^S \cdot \left( ZPD_S - ZPD_{ref} \right) \end{cases} \qquad (3)$$

wherein

   - the first and second equations refer respectively to the range and azimuth differences between the position of the point target mapped from the master image and the candidate position in the slave image,
   - the third and fourth equations refer to the relationship derived from the point target defocus analysis between height and tropospheric delay for the point targets of the master and slave images respectively,
   - $K_{Rg}$, $K_{Az}$, $\beta_{Rg}^M$, $\beta_{Rg}^S$, $\beta_{Az}^M$, $\alpha^M$ and $\alpha^S$ represent the dependencies between the different measurements and the different unknowns and can be numerically computed or theoretically derived,

- $h_{ref}^{M}$ and $h_{ref}^{S}$ refer to the height obtained from the point target defocus analysis for the point targets of the master and slave images respectively given the reference zenith path delay, i.e. $ZPD_{ref}$,

- the equation system is composed of four equations and has three unknowns, namely the point target's height and its tropospheric delay for the master and slave image, i.e. $h$, $ZPD_M$ and $ZPD_S$ repectively,

- wherein since the equations are not linearly dependent, it is possible to find a solution and retrieve the unknowns.

3. Method according to claim 1 or 2, **characterized in that**

- different geometry refers to different flight directions and different incidence angles, wherein different flight directions means that the different flight directions differ by at least a tenth of a degree and different incidence angles means that the incidence angles differ at least by one degree,
- wherein both differences are defined for a system in X-band and with azimuth and range resolutions below the meter.

4. Method according to claim 3, **characterized in that** said SAR images are obtained by SAR-systems with different characteristics, wherein the differences in flight direction and incidence angle are scaled accordingly.

5. Method according to claim 4, **characterized in that** the differences in flight direction and incidence angle are scaled linearly with azimuth and range resolution respectively.

## Patentansprüche

1. Verfahren zur automatischen dreidimensionalen Geolokalisierung von SAR-Targets und gleichzeitigen Schätzung troposphärischer Ausbreitungsverzögerungen mittels zweier SAR-Bilder mit langer Apertur, die jeweils eine Auflösung von unter zwei Metern aufweisen, mit folgenden Schritten:

a) Bereitstellen zweier SAR-Aufnahmen mit langer Apertur, die mit unterschiedlicher Geometrie erfasst wurden, als Input in das Verfahren,
b) Punktzielerkennung in beiden Bildern,
c) Bereitstellen einer Defokus-Analyse für sämtliche Punktziele in beiden Bildern, wobei für jedes Punktziel eine Beziehung zwischen einer geschätzten Höhe und einer troposphärischen Verzögerung hergestellt wird,
d) Wählen eines der zwei Bilder als Master-Bild und das andere als Slave-Bild,
e) anschließend Durchführen der folgenden Unterschritte für jedes Punktziel des Master-Bilds:

e1) Abbilden des Punktziels auf das Slave-Bild unter Berücksichtigung von dessen Höhenschätzung aus Schritt c) bei einer Referenz-Zenit-Pfadverzögerung und von dessen Entfernung und Azimut-Position,
e2) Suchen nach Kandidaten in dem Slave-Bild, die sich auf das abgebildete Punktziel aus dem Master-Bild beziehen könnten, und Identifizieren der Position eines Kandidaten in dem Slave-Bild, wobei mehr als ein Kandidat ermittelt werden kann, und
e3) anschließend Lösen eines aus vier Gleichungen bestehenden Gleichungssystems für jeden Kandidaten, wobei zwei Gleichungen die Entfernungsdifferenz und die Azimutdifferenz $\Delta R_g$ und $\Delta A_z$ zwischen der Position des aus dem Master-Bild abgebildeten Punktziels und der Position eines ermittelten Kandidaten in dem Slave-Bild betreffen, und wobei die anderen beiden Gleichungen die in Schritt c) hergestellte Beziehung zwischen Höhe und troposphärischer Verzögerung für die abgebildeten Punktziele des Master-Bilds und einem ermittelten Kandidaten des Slave-Bilds betreffen, und

f) Durchführen statistischer Schätzungen der troposphärischen Verzögerung, um für sämtliche Punktziele die wahrscheinlichsten Kandidaten zu identifizieren, die dem jeweiligen abgebildeten Punktziel des Master-Bilds zugeordnet werden können.

2. Verfahren nach Anspruch 1, **dadurch gekennzeichnet, dass** das erwähnte Gleichungssystem wie folgt beschrieben werden kann:

$$\begin{cases} \Delta Rg = K_{Rg} \cdot \left(h - h_{ref}^M\right) + \beta_{Rg}^M \cdot \left(ZPD_M - ZPD_{ref}\right) + \beta_{Rg}^S \cdot \left(ZPD_S - ZPD_{ref}\right) \\ \Delta Az = K_{Az} \cdot \left(h - h_{ref}^M\right) + \beta_{Az}^M \cdot \left(ZPD_M - ZPD_{ref}\right) \\ h_{ref}^M = h + \alpha^M \cdot \left(ZPD_M - ZPD_{ref}\right) \\ h_{ref}^S = h + \alpha^S \cdot \left(ZPD_S - ZPD_{ref}\right) \end{cases} \quad (3)$$

wobei

- die ersten und zweiten Gleichungen jeweils die Entfernungsdifferenz und die Azimutdifferenz zwischen der Position des aus dem Master-Bild abgebildeten Punktziels und der Kandidatenposition in dem Slave-Bild betreffen;
- die dritten und vierten Gleichungen die Beziehung betreffen, die aus der Punktziel-Defokus-Analyse zwischen Höhe und troposphärischer Verzögerung für die Punktziele der Master-Bilder bzw. Slave-Bilder abgeleitet wird;
- $K_{Rg}$, $K_{Az}$, $\beta_{Rg}^M$, $\beta_{Rg}^S$, $\beta_{Az}^M$, $\alpha^M$ und $\alpha^S$ die Abhängigkeiten zwischen den unterschiedlichen Messungen und den unterschiedlichen Unbekannten repräsentieren und numerisch berechnet oder theoretisch abgeleitet werden können;
- $h_{ref}^M$ und $h_{ref}^S$ die Höhe betreffen, die sich aus der Punktziel-Defokus-Analyse für die Punktziele des Master-Bilds bzw. des Slave-Bilds ergibt, unter Berücksichtigung der Referenz-Zenit-Pfadverzögerung, d.h. $ZPD_{ref}$;
- das Gleichungssystem aus vier Gleichungen besteht und drei Unbekannte aufweist, nämlich die Höhe des Punktziels und dessen troposphärische Verzögerung für das Master-Bild und das Slave-Bild, d.h. $h$, $ZPD_M$ bzw. $ZPD_S$;
- wobei, da die Gleichungen nicht linear abhängig sind, es möglich ist, die Gleichungen zu lösen und die Unbekannten zu ermitteln.

3. Verfahren nach Anspruch 1 oder 2, **dadurch gekennzeichnet, dass**

- eine unterschiedliche Geometrie sich auf unterschiedliche Flugrichtungen und unterschiedliche Einfallswinkel bezieht, wobei unterschiedliche Flugrichtungen bedeutet, dass die unterschiedlichen Flugrichtungen sich mindestens um ein Zehntel Grad voneinander unterscheiden, und wobei unterschiedliche Einfallswinkel bedeutet, dass sich die Einfallswinkel mindestens um ein Grad voneinander unterscheiden,
- wobei beide Unterschiede für ein System im X-Band und mit Azimut- und Entfernungsauflösungen von weniger als einem Meter definiert sind.

4. Verfahren nach Anspruch 3, **dadurch gekennzeichnet, dass** die SAR-Bilder von SAR-Systemen mit unterschiedlichen Charakteristiken erhalten werden, wobei die Unterschiede bezüglich der Flugrichtung und dem Einfallswinkel dementsprechend skaliert sind.

5. Verfahren nach Anspruch 4, **dadurch gekennzeichnet, dass** die Unterschiede bezüglich der Flugrichtung und dem Einfallswinkel mit Azimut- bzw. Entfernungsauflösung linear skaliert sind.

**Revendications**

1. Procédé de géolocalisation tridimensionnelle automatique de cibles SAR et d'estimation simultanée de retards de propagation troposphériques à l'aide de deux images SAR de grande ouverture fournissant chacune une résolution inférieure à deux mètres, comprenant

a) deux acquisitions SAR avec une grande ouverture acquise avec une géométrie différente en entrée du procédé,
b) une détection de cible ponctuelle dans les deux images,
c) la fourniture d'une analyse de défocalisation pour toutes les cibles ponctuelles dans les deux images, pour chaque cible ponctuelle une relation entre une hauteur estimée et un retard troposphérique étant établie,
d) l'une des deux images est sélectionnée en tant qu'image maîtresse et l'autre en tant qu'image esclave,
e) puis, pour chaque cible ponctuelle de l'image maîtresse les sous-étapes suivantes sont réalisées :

e1) la cible ponctuelle est mappée sur l'image esclave en prenant en compte son estimation de hauteur de l'étape c) à un retard de trajet de zénith de référence et sa portée et position d'azimut,

e2) une recherche de candidats dans l'image esclave qui peuvent faire référence à la cible ponctuelle mappée à partir de l'image maîtresse et l'identification de la position d'un candidat dans l'image esclave, dans lequel plus d'un candidat peut être trouvé, et

e3) ensuite, pour chaque candidat, un système d'équation composé de quatre équations est résolu, dans lequel deux équations sont liées aux différences de portée et d'azimut $\Delta R_g$ et $\Delta A_z$ entre la position de la cible ponctuelle mappée depuis l'image maîtresse et la position d'un candidat trouvé dans l'image esclave et dans lequel les deux autres équations font référence à la relation établie à l'étape c) entre hauteur et retard troposphérique pour les cibles ponctuelles mappées de l'image maîtresse et un candidat trouvé de l'image esclave, et

f) des estimations statistiques du retard troposphérique sont réalisées pour identifier pour toutes les cibles ponctuelles les candidats les plus probables à associer aux cibles ponctuelles mappées respectives de l'image maîtresse.

2. Procédé selon la revendication 1, **caractérisé en ce que** le système d'équation mentionné peut être décrit comme suit :

$$\begin{cases} \Delta Rg = K_{Rg} \cdot \left(h - h_{ref}^M\right) + \beta_{Rg}^M \cdot \left(ZPD_M - ZPD_{ref}\right) + \beta_{Rg}^S \cdot \left(ZPD_S - ZPD_{ref}\right) \\ \Delta Az = K_{Az} \cdot \left(h - h_{ref}^M\right) + \beta_{Az}^M \cdot \left(ZPD_M - ZPD_{ref}\right) \\ h_{ref}^M = h + \alpha^M \cdot \left(ZPD_M - ZPD_{ref}\right) \\ h_{ref}^S = h + \alpha^S \cdot \left(ZPD_S - ZPD_{ref}\right) \end{cases} \qquad (3)$$

dans lequel

- les première et deuxième équations font respectivement référence aux différences de portée et d'azimut entre la position de la cible ponctuelle mappée depuis l'image maîtresse et la position de candidat dans l'image esclave,
- les troisième et quatrième équations font référence à la relation dérivée de l'analyse de défocalisation de cible ponctuelle entre hauteur et retard troposphérique pour les cibles ponctuelles des images maîtresse et esclave respectivement ;
- $K_{Rg}$, $K_{Az}$, $\beta_{Rg}^M$, $\beta_{Rg}^S$, $\beta_{Az}^M$, $\alpha^M$ et $\alpha^S$ représentent les dépendances entre les différentes mesures et les différentes inconnues et peuvent être calculés numériquement ou dérivés théoriquement,
- $h_{ref}^M$ et $h_{ref}^S$ font référence à la hauteur obtenue à partir de l'analyse de défocalisation de cible ponctuelle pour les cibles ponctuelles des images maîtresse et esclave respectivement étant donné le retard de chemin de zénith de référence, c'est-à-dire $ZPD_{ref}$,
- le système d'équation est composé de quatre équations et comporte trois inconnues, à savoir la hauteur de la cible ponctuelle et son retard troposphérique pour l'image maîtresse et esclave, c'est-à-dire $h$, $ZPD_M$ et $ZPD_S$ respectivement,
- dans lequel puisque les équations ne sont pas dépendantes linéairement, il est possible de trouver une solution et de récupérer les inconnues.

3. Procédé selon la revendication 1 ou 2, **caractérisé en ce que**

- une géométrie différente fait référence à des directions de vol différentes et des angles d'incidence différents, dans lequel des directions de vol différentes signifie que les directions de vol différentes diffèrent d'au moins un dixième d'un degré et des angles d'incidence différents signifie que les angles d'incidence diffèrent d'au moins un degré,
- dans lequel les deux différences sont définies pour un système dans la bande X et avec des résolutions d'azimut et de portée inférieures au mètre.

4. Procédé selon la revendication 3, **caractérisé en ce que** lesdites images SAR sont obtenues par des systèmes SAR avec des caractéristiques différentes, dans lequel les différences de direction de vol et d'angle d'incidence sont mises à l'échelle en conséquence.

**5.** Procédé selon la revendication 4, **caractérisé en ce que** les différences de direction de vol et d'angle d'incidence sont mises à l'échelle linéairement avec une résolution d'azimut et de portée, respectivement.

**Figure 1**

**Fig. 2**

**Fig. 3**

Master Image

Fig. 4a

Slave Image

Fig. 4b

Master Image

Figure 5a

Slave Image

Figure 5b

## 2D ZPDs Histogram

**Fig. 6**

**Fig. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PERISSIN, D. ; ROCCA, F.** High-Accuracy Urban DEM Using Permanent Scatterers. *Geoscience and Remote Sensing, IEEE Transactions on,* November 2006, vol. 44 (11), 3338, , 3347
- **GERNHARDT, STEFAN ; BAMLER, RICHARD.** Deformation monitoring of single buildings using meter-resolution SAR data in PSI. *ISPRS Journal of Photogrammetry and Remote Sensing,* 2012, vol. 73, 68-79
- **GOEL, K. ; ADAM, N.** Three-Dimensional Positioning of Point Scatterers Based on Radargrammetry. *Geoscience and Remote Sensing, IEEE Transactions on,* June 2012, vol. 50 (6), 2355, , 2363
- Superresolving SAR Tomography for Multidimensional Imaging of Urban Areas: Compressive sensing-based TomoSAR inversion. **XIAO XIANG ZHU ; BAMLER, R.** Signal Processing Magazine. IEEE, July 2014, vol. 31, 51, , 58
- **EINEDER, M. ; MINET, C. ; STEIGENBERGER, P. ; XIAOYING CONG; FRITZ, T.** Imaging Geodesy-Toward Centimeter-Level Ranging Accuracy With TerraSAR-X. *Geoscience and Remote Sensing, IEEE Transactions on,* February 2011, vol. 49 (2), 661, , 671
- **BALSS, ULRICH ; GISINGER, CHRISTOPH ; CONG, XIAO YING ; BRCIC, RAMON ; HACKEL, STEFAN ; EINEDER, MICHAEL.** Precise Measurements on the Absolute Localization Accuracy of TerraSAR-X on the Base of Far-Distributed Test Sites. *EUSAR 2014; 10th European Conference on Synthetic Aperture Radar; Proceedings of,* 03 June 2014, 1, , 4
- Absolute Height Estimation Using a Single TerraSAR-X Staring Spotlight Acquisition. **DUQUE, S. ; BREIT, H. ; BALSS, U. ; PARIZZI, A.** Geoscience and Remote Sensing Letters. IEEE, vol. PP, 1, , 5